# EUROPÄISCHE PATENTANMELDUNG

(11) **EP 3 115 136 A1**
(43) Veröffentlichungstag der Anmeldung: **11.01.2017**
(21) Anmeldenummer: 15175859.6
(22) Anmeldetag: 08.07.2015
(51) Int. Cl.: B23B 5/08, B23B 5/16

(54) **ROHRBEARBEITUNGSMASCHINE UND VERFAHREN ZUR ROHRBEARBEITUNG**

(71) Anmelder: Miba Automation Systems Ges.M.b.H., 4663 Laakirchen (AT)
(72) Erfinder: GROSSAUER, Florian, 4812 Pinsdorf (AT); KLAUSNER, Josef, 4816 Gschwandt (AT)
(74) Vertreter: Burger, Hannes

(57) **Zusammenfassung**

Die Erfindung betrifft ein Verfahren zur spanenden Bearbeitung einer ersten Stirnfläche (2) eines Rohres (3), das einen Rohrmantel (6) aufweist, mit einem spanenden Werkzeug (14), wobei das Rohr (3) während der spanenden Bearbeitung in oder auf einer Werkstückaufnahme (5) abgestützt wird und mit einer optischen Messeinrichtung (15), mittels der die Zustellung des Werkzeugs (14) zur ersten Stirnfläche (2) bestimmt wird, wobei das Rohr (3) in oder auf der Werkstückaufnahme (5) auf dem Rohrmantel (6) drehbeweglich abgestützt wird und während der spanenden Bearbeitung gedreht wird und über die Messeinrichtung (15) die Änderung der horizontalen Lage des Rohres (3) bestimmt wird und über diese Änderung der Lage die erforderliche Zustellung des spanenden Werkzeugs (14) zum Rohr (3) berechnet wird und das Werkzeug (14) entsprechend der berechneten Zustellung während der spanenden Bearbeitung gegebenenfalls nachjustiert wird.

## Beschreibung

Die Erfindung betrifft ein Verfahren zur spanenden Bearbeitung einer ersten Stirnfläche eines Rohres, das einen Rohrmantel aufweist, mit einem spanenden Werkzeug, wobei das Rohr während der Bearbeitung in einer Werkstückaufnahme abgestützt wird, und mit einer optischen Messeinrichtung, mittels der die Zustellung des Werkzeugs bestimmt wird.

Weiter betrifft die Erfindung eine Rohrbearbeitungsmaschine zum spanenden Bearbeiten einer ersten Stirnfläche eines Rohres, mit einer Werkstückaufnahme zur Aufnahme des Rohres während der Bearbeitung, einer Werkzeughalterung mit einem verstellbaren spanenden Werkzeug, und mit einer optischen Messeinrichtung.

Türme von Windkraftanlagen können aus mehreren Rohrschüssen zusammengesetzt werden. Die einzelnen Rohrschüsse können dazu aus einem ebenen Blech durch Einrollen mittels eines Walzbiegeprozess herstellt werden. Die aufeinander zuweisenden Längsstirnflächen werden nach dem einrollen miteinander verschweißt und die Schweißnaht üblicherweise nachbearbeitet. Durch das Einrollen werden die Stirnflächen des dadurch gebildeten Rohrmantels ungleichmäßig, d.h. nicht plan, ausgebildet. Dies kann im zusammengerollten Zustand des Rohrschusses einen Versatz von typischerweise 2 mm bis 5 mm bewirken. Weiter weisen die Stirnflächen üblicherweise eine herstellungsbedingte Welligkeit auf. Beim Zusammensetzen des Turms der Windkraftanlage werden die dadurch zwischen zwei Rohrschüssen manuell ausgefüllt bevor die Rohschüsse miteinander verschweißt werden. Bei einem üblichen Rohrschuss-Durchmesser von 8 m bedeutet diese eine manuelle Bearbeitung in der Größenordnung von vier bis acht Stunden. Es ist also wünschenswert, eine automatische Planbearbeitung der Stirnflächen vornehmen zu können. Aufgrund der großen Durchmesser der Rohschüsse ist diese allerdings nicht einfach umsetzbar.

Aus dem Stand der Technik sind bereits verschiedenste Verfahren und Maschinen zur Bearbeitung derart großer Rohre bekannt. So beschreibt z.B. die DE 10 2008 035 480 A1 ein Verfahren zur Vermessung von parallelen oder zumindest in etwa parallelen Flanschflächen von Bauelementen für Windkraftanlagen aufweisend die folgenden Verfahrensschritte:
a) Anordnen einer Lasereinrichtung, welche einen Bewegungslaser, der zur Aussendung eines innerhalb einer Laserebene bewegten Laserstrahls geeignet ist, und einen ruhenden Laser, der zur Aussendung eines zu der Laserebene senkrecht stehenden Laserstrahls geeignet ist, aufweist, an einem ersten Standpunktzentrum, so dass die Laserebene beabstandet, insbesondere parallel oder geneigt beabstandet, zu einer ersten zu vermessenden Flanschfläche verläuft,
b) Anordnen eines Laserempfängers, insbesondere eines Zweiachsempfängers, der zur Positionserfassung eines Laserstrahls, insbesondere entlang einer oder zwei Messrichtungen, geeignet ist, an einem zweiten Standpunktzentrum, so dass der zu der Laserebene senkrechte Laserstrahl auf den Laserempfänger trifft, und Erfassung der Position des zu der Laserebene senkrechten Laserstrahls an dem Laserempfänger als Laserreferenzposition,
c) Anordnen von zumindest einer Messeinrichtung an einer ersten Messstelle der ersten Flanschfläche, so dass sich eine Messachse der Messeinrichtung entlang einer, zu der ersten Körperoberfläche insbesondere zumindest etwa senkrechten, Messrichtung in bestimmtem Abstand von der Messstellenoberfläche erstreckt, und Positionswertermittlung des Schnittpunkts zwischen der Laserebene und der Messeinrichtung an der Messachse, sowie Durchführung dieses Verfahrensschrittes zur Positionswertermittlung an einer oder mehreren weiteren Messstellen der ersten Körperoberfläche,
d) Anordnen der Lasereinrichtung an dem zweiten Standpunktzentrum, Anordnen des Laserempfängers an dem ersten Standpunktzentrum und Ausrichten des ruhenden Lasers, so dass dessen Laserstrahl den Laserempfänger an der Laserreferenzposition trifft und sich die Laserebene des Bewegungslasers beabstandet zu einer zweiten, zu vermessenden Körperoberfläche erstreckt,
e) Anordnen von zumindest einer Messeinrichtung an einer ersten Messstelle der zweiten Flanschfläche, so dass sich eine Messachse der Messeinrichtung entlang einer, zu der zweiten Flanschfläche insbesondere zumindest etwa senkrechten, Messrichtung in bestimmtem Abstand von der Messstellenoberfläche erstreckt, und Positionswertermittlung des Schnittpunkts zwischen der Laserebene und der Messeinrichtung an der Messachse, sowie Durchführung dieses Verfahrensschrittes zur Positionswertermittlung an einer oder mehreren weiteren Messstellen der zweiten Flanschfläche,
f) Ermittlung, insbesondere rechnergestützt automatisierte Ermittlung, von Form- und/oder Lagebeziehungen zwischen der ersten und der zweiten Flanschfläche mittels vergleichender Bewertung von an der ersten Flanschfläche ermittelten Positionswerten und/oder Positionswertdifferenzen und/oder Positionswertverläufen verschiedener Messstellen und an der zweiten Flanschfläche ermittelten Positionswerten und/oder Positionswertdifferenzen und/oder Positionswertverläufen verschiedener Messstellen.

Die DE 10 2008 027 197 A1 beschreibt ein Verfahren zum zerspanenden plan bearbeiten von Flanschen eines Turms einer Windkraftanlage, wobei ausgehend von einer zunächst festgelegten Referenzfläche mittels eines Bearbeitungswerkzeuges die Werkstückoberfläche bearbeitet wird, wobei die Referenzfläche durch Einbringen von Vertiefungen in die Werkfläche festgelegt wird, wobei die Böden der Vertiefungen Stützstellen der Referenzfläche bilden.

Flansche sind üblicherweise breit, sodass sie beispielsweise die Einbringung von den beschriebenen Vertiefungen zur Festlegung einer Referenzfläche ermöglichen. Ein derartiges Verfahren ist bei den im Vergleich zu den Flanschen schmalen Stirnflächen von Rohren kaum möglich.

Der vorliegenden Erfindung liegt die Aufgabe zugrunde, ein Verfahren zur Plan-Bearbeitung von Stirnflächen von großdimensionierten Rohren, wie sie insbesondere in Windkraftanlagen zum Aufbau des die Gondel tragenden Turms zum Einsatz kommen, anzugeben bzw. eine Vorrichtung zur Durchführung dieses Verfahrens bereitzustellen.

Die Aufgabe der Erfindung wird mit dem eingangs genannten Verfahren gelöst, bei dem vorgesehen ist, dass das Rohr in der Werkstückaufnahme auf dem Rohrmantel drehbeweglich abgestützt wird und während der spanenden Bearbeitung gedreht wird und dass über die Messeinrichtung die Änderung der horizontalen Lage des Rohres bestimmt wird und über diese Änderung der Lage die erforderliche Zustellung des spanenden Werkzeugs zum Rohr berechnet wird und das Werkzeug entsprechend der berechneten Zustellung während der spanenden Bearbeitung nachjustiert wird.

Weiter wird die Aufgabe der Erfindung durch die eingangs genannte Rohrbearbeitungsmaschine gelöst, bei der die Werkstückaufnahme einen Rollenantrieb für eine Drehbewegung des Rohres um eine Längsmittelachse des Rohres während der Bearbeitung der Stirnfläche aufweist, und dass die Messeinrichtung eine Datenverarbeitungsanlage mit einem Softwareprogramm umfasst, mit dem die Veränderung der Lage des Rohres während der Bearbeitung berechnet werden kann und die Datenverarbeitungsanlage mit der Werkzeughalterung zur Nachjustierung des spanenden Werkzeugs aufgrund der berechneten Lage des Rohres verbunden ist.

Von Vorteil ist dabei, dass keine Einspannung des Rohres für die Bearbeitung erforderlich ist. Durch die liegende Anordnung des Rohres auf der Werkstückhalterung richtet sich das Rohr aufgrund der Gewichtskraft mehr oder weniger selbst aus. Um dabei Änderungen in der Lage des Rohres während der Drehbewegung in Relation zum spanenden Werkzeug, die durch den Antrieb verursacht sein können, berücksichtigen zu können, ist vorgesehen, dass die Veränderung der Lage des Rohres erfasst und basierend darauf die Zustellung des Werkzeugs verändert bzw. nachjustiert wird, sollte dies erforderlich sein. Es kann damit die Ebenheit der Stirnfläche verbessert werden. Durch den Entfall von Spannvorrichtungen für das Rohr kann die Rohrbearbeitungsmaschine deutlich einfacher, kompakter und kostengünstiger ausgeführt werden, was ein entsprechender Vorteil ist, wenn man die Durchmesser der großen Rohre bzw. Rohrschüsse für übliche Türme von Windkraftanlagen bedenkt. Die Rohrbearbeitungsmaschine ist damit auch einfacher in einer Fertigungsstraße zur Herstellung derartiger Rohrschüsse integrierbar. Da anders als im Stand der Technik das Rohr selbst angetrieben wird, kann die Rohrbearbeitungsmaschine deutlich kleiner ausgeführt werden. Dies ist auch in Hinblick auf eine mobile Ausführung der Rohrbearbeitungsmaschine, d.h. dass die Bearbeitung der Rohre vor Ort erfolgen kann, von Vorteil. Weiter ist von Vorteil, dass die Rohrbearbeitungsmaschine während der Bearbeitung des Rohres immer im Bereich der Abstützung des Rohres auf dem Werkstückhalter verbleiben kann.

Besonders vorteilhaft ist es, wenn die Lage des Rohres auf den Zeitpunkt der Bearbeitung berechnet wird, wozu das Softwareprogramm der Rohrbearbeitungsmaschine zur Berechnung der Lage des Rohres während des Bearbeitungszeitpunktes ausgelegt ist. Es ist damit die Genauigkeit der Planbearbeitung der Stirnfläche des Rohres weiter verbesserbar, da die zeitliche Komponente zwischen der Messung der Lage des Rohres und der Bearbeitung der Stirnfläche mitberücksichtigt werden kann. Dies scheint zwar auf den ersten Blick bedeutungslos, da aufgrund der üblichen Rechnergeschwindigkeiten von Datenverarbeitungsanlagen das Messergebnis praktisch unmittelbar nach der Datenerfassung zur Verfügung steht, jedoch hat sich in der Praxis gezeigt, dass aufgrund von Walkbewegungen bzw. Taumelbewegungen des Rohres während der Drehung um die eigene Achse auf der Werkstückaufnahme der Effekt der Zeitversetzung der Nachjustierung der Zustellung des spanenden Werkzeugs dazu führen kann, dass die Stirnflächen wie ein Bleistift "angespitzt" werden. Durch die zusätzliche Berücksichtigung der Zeitkomponente zur örtlichen Komponente der Messdaten kann dem wirkungsvoll entgegnet werden.

Nach einer anderen Ausführungsvariante des Verfahrens kann mit Hilfe einer vertikalen Bezugsebene mit der Messeinrichtung die Änderung der Winkellage des Rohres bestimmt wird und diese Daten in der Berechnung der Zustellung des Werkzeugs zu der Stirnfläche berücksichtigt werden. Es ist damit möglich, Taumelbewegungen des Rohres während der spanenden Bearbeitung besser berücksichtigen zu können, wodurch die Ebenheit der Stirnfläche und insbesondere auch die Planparallelität der beiden Stirnflächen des Rohres zueinander verbessert werden kann.

Gemäß einer bevorzugten Ausführungsvariante des Verfahrens ist vorgesehen, dass eine Messeinrichtung verwendet wird, die einen rotierenden Laser und mehrere Laserlichtsensoren umfasst, wobei die Lasersensoren an einer Innenfläche des Rohrmantels angeordnet werden und mit dem Laser durch Rotation innerhalb des Rohrmantels im Bereich der Lasersensoren eine Bezugsebene erzeugt wird. Die Rohrbearbeitungsmaschine kann dafür einen rotierenden Laser aufweisen, der innerhalb des Rohres angeordnet ist und dem zumindest drei Laserlichtsensoren zugeordnet sind, sodass innerhalb des Rohres durch die Rotation des Lasers eine Bezugsebene aufgespannt werden kann. Es ist damit möglich die Ist-Position des Rohres zu jedem Zeitpunkt der spanenden Bearbeitung besser bestimmen zu können und nicht nur die horizontale Lage und gegebenenfalls die Winkellage des Rohres. Es kann damit in weiterer Folge das Ergebnis der spanenden Bearbeitung, d.h. die Ebenheit der Stirnflächen und deren Planparallelität zueinander weiter verbessert werden.

Nach einer anderen Ausführungsvariante des Verfahrens kann vorgesehen sein, dass beide Stirnflächen des Rohres gleichzeitig spanend bearbeitet werden. In der Rohrbearbeitungsmaschine kann dazu im Bereich einer zweiten Stirnfläche des Rohres eine zweite Werkzeughalterung mit einem zweiten spanenden Werkzeug angeordnet sein. Durch die gleichzeitige Bearbeitung der beiden Stirnflächen des Rohres ist es möglich, dass die beiden spanenden Werkzeuge mit Daten versorgt werden, die auf den gleichen Zeitpunkt der Messung zurückgehen, wodurch die Planparallelität der beiden Stirnflächen zueinander verbessert werden kann. Zudem ist damit ein entsprechender Kostenvorteil aufgrund der Zeitersparnis der Rohrbearbeitung erreichbar. Insbesondere entfällt damit im Vergleich zu einer nacheinander erfolgenden Bearbeitung der Stirnflächen ein Manipulationsaufwand zwischen den Bearbeitungen der beiden Stirnflächen.

Von Vorteil ist, wenn gemäß einer Ausführungsvariante dazu die beiden Werkzeuge unabhängig voneinander verstellbar ausgebildet sind. Es wird damit erreicht, dass die Veränderung der Lage des Rohres auf jeder der beiden Stirnseiten des Rohres für sich berücksichtigt wird, sodass eine mögliche Abweichung von der exakten Planparallelität der beiden Stirnflächen zueinander von einer Stirnseite nicht auf die andere Stirnseite übertragen wird.

Gemäß einer Ausführungsvariante der Rohrbearbeitungsmaschine kann vorgesehen sein, dass die Messeinrichtung eine Videokamera oder einen Laser umfasst. Die Messeinrichtung kann damit bei hoher Genauigkeit des Messergebnisses relativ einfach aufgebaut werden.

Bevorzugt weisen die Laserlichtsensoren der Laser-Messeinrichtung jeweils eine Magnethalterung auf, mit der die Laserlichtsensoren auf der inneren Mantelfläche des Rohres befestigt werden können. Es wird damit eine einfache Anordenbarkeit und Entfernbarkeit der Laserlichtsensoren ohne Beschädigung der Oberfläche des Rohrmantels erreicht.

Zum besseren Verständnis der Erfindung wird diese anhand der nachfolgenden Figuren näher erläutert.

Es zeigen jeweils in vereinfachter, schematischer Darstellung:
Fig. 1 eine Rohrbearbeitungsmaschine in Seitenansicht;
Fig. 2 ein Detail einer Ausführungsvariante einer Rohrbearbeitungsmaschine in Schrägansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

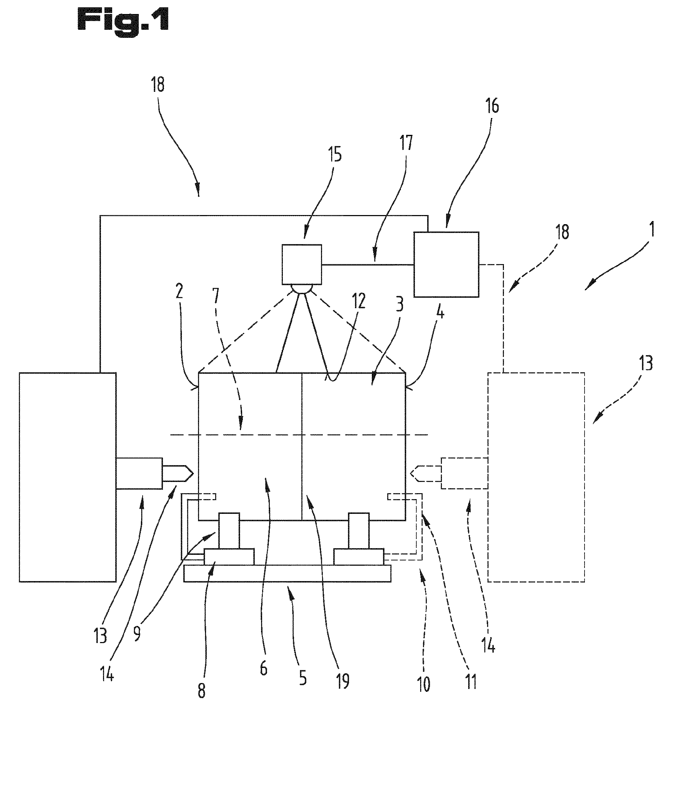

In Fig. 1 ist eine erste Ausführungsvariante einer Rohrbearbeitungsmaschine 1 (einer CNC-Fräsmaschine) in Seitenansicht dargestellt. Die Rohrbearbeitungsmaschine 1 ist zur spanenden Bearbeitung einer ersten Stirnfläche 2 eines Rohres 3 bzw. eines Rohrschusses vorgesehen, insbesondere eines Rohres 3 das ein Segment eines Turms einer Windkraftanlage bildet. Das Rohr 3 weist also insbesondere einen sehr großen Durchmesser auf, der im Bereich von beispielsweise 8 m liegen kann. Dieser Wert soll aber nur zur Verdeutlichung der Rohrdimension dienen und soll nicht als Beschränkung verstanden werden. Die Rohrbearbeitungsmaschine 1 ist allerdings nicht für Rohre 3 mit einem Durchmesser von kleiner als 0,5 m, insbesondere kleiner 1,5 m, vorgesehen, da in diesem Fall das Gewicht des Rohres 3 zu gering ist, wie dies aus den nachfolgenden Ausführungen deutlich wird.

Bevorzugt wird die Rohrbearbeitungsmaschine 1 zur Befräsung der ersten Stirnfläche 2 und insbesondere auch einer zweiten Stirnfläche 4 des Rohres 3 eingesetzt um damit die Ebenheit der ersten und der zweiten Stirnfläche 2, 4 und deren Planparallelität zueinander zu verbessern. Die Genauigkeit der Planparallelität der beiden Stirnflächen 2, 4 zueinander, die mit der Rohrbearbeitungsmaschine 1 erzeugt werden kann, liegt im Bereich von wenigen Zehntelmillimetern (bis maximal 5/10 mm). Es sei jedoch darauf hingewiesen, dass die Rohrbearbeitungsmaschine 1 auch für andere spanende Bearbeitungen von Rohren 3 im Bereich der Stirnflächen 2, 4 eingesetzt werden kann, beispielsweise für die, gegebenenfalls gleichzeitige, Bearbeitung der Mantelfläche.

Die Rohrbearbeitungsmaschine 1 umfasst eine Werkstückaufnahme 5. Die Werkstückaufnahme dient der Halterung des Rohres 3 während der spanenden Bearbeitung seiner ersten und/oder zweiten Stirnfläche 2, 4.

Das Rohr 3 weist einen Rohrmantel 6 auf, der sich entlang einer Längsmittelachse 7 durch das Rohr 3 zwischen der ersten Stirnfläche 2 und der zweiten Stirnfläche 4 erstreckt. Der Rohrmantel 6 weist beispielsweise eine Höhe zwischen 2 m und 10 m auf. Die Höhe kann aber auch größer als 10 m sein, da dies einfach durch Änderung der Länge der Werkstückaufnahme 5 in Richtung der Längsmittelachse 7 des Rohres 3 berücksichtigt werden kann. Während der spanenden Bearbeitung wird das Rohr 3 liegend in der Werkstückaufnahme 5 abgestützt. Dazu weist die Werkstückaufnahme 5 einen Rollenantrieb 8 mit Rollen 9 auf, auf dessen Rollen 9 sich das Rohr 3 abstützt. Durch den Rollenabtrieb 8 wird das Rohr 3 während der spanenden Bearbeitung gedreht. Die Längsmittelachse 7 bildet dabei die Drehachse.

Zumindest eine der Rollen 9 des Rollenantriebs 8 ist angetrieben. Bevorzugt sind zwei bzw. beiden Rollen 9 auf einer Seite des Rohrmantels 6 entlang der Längsmittelachse 7 angetrieben, beispielsweise die in Fig. 1 ersichtlichen Rollen 9. Auf der der oder den angetriebenen Rolle(n) 9 gegenüberliegenden Seite sind bevorzugt frei drehbewegliche Stützrollen (in Fig. 1 nicht dargestellt) angeordnet, die sich aufgrund der Drehbewegung des Rohres 3 frei mitdrehen und somit das Rohr 3 lediglich abstützen. Jeweils eine der angetriebenen Rollen 9 befindet sich bevorzugt im Bereich der ersten Stirnfläche 2 bzw. der zweiten Stirnfläche 4.

Selbstverständlich können auch mehr als die genannte Anzahl an Rollen 9 im Rollenantrieb 8 vorhanden sein.

Jeweils eine Rolle 9 und die Stützrolle(n) einer Seite, d.h. im Bereich der ersten Stirnfläche 2 bzw. der zweiten Stirnfläche 4, sind bevorzugt in ihrem relativen Abstand voneinander veränderbar, beispielsweise über eine Verstellspindel, sodass Rohre 3 mit unterschiedlichen Durchmessern in der Rohrbearbeitungsmaschine 1 spanend bearbeitet werden können.

Es sind selbstverständlich auch andere, zum Rollenantrieb vergleichbare Antriebe für die Drehung des Rohres 3 einsetzbar.

Das Rohr 3 ist während der spanenden Bearbeitung bevorzugt frei auf dem Rollenantrieb 8 gelagert, d.h. ohne Einspannung mit einer Spannvorrichtung. Es kann jedoch eine Führungsvorrichtung 10 vorgesehen sein, wie dies in Fig. 1 strichliert dargestellt ist. Die Führungsvorrichtung 10 kann so ausgeführt sein, dass sie die jeweilige Stirnseite 2 oder 4 mit einem Schenkel 11 umgreift und in das innere des Rohres 3 hineinragt. Sollte die Führungsvorrichtung 10 zur Anlage an eine Rohrmantelinnenseite 12 ausgebildet sein, kann diese am Schenkel 8 eine frei drehende, d.h. mit keinem Antrieb versehene, Führungsrolle aufweisen, die an der Rohrmantelinnenseite 12 während der Drehbewegung des Rohres 3 anliegt. Mit der Führungseinrichtung 10 kann eine axiale Wanderung des Rohres 3 während der spanenden Bearbeitung verhindert bzw. auf ein über die Beabstandung der Führungseinrichtung 10 von der jeweiligen Stirnseite 2 oder 4 des Rohrmantels 6 vorbestimmbares Ausmaß reduziert werden. Es kann mit der Führungsvorrichtung 10 auch eine Abschaltvorrichtung verbunden sein, die die Bearbeitung des Rohres 3 unterbricht, falls ein Maximalwert der axialen Wanderung des Rohres 3 überschritten wird. Die Abschaltung kann beispielsweise ausgelöst werden, wenn das Rohr 3 den vertikalen Schenkel der Führungsvorrichtung 10 berührt bzw. wenn das Rohr 3 eine Kraft auf die Führungsvorrichtung 10 ausübt, die größer ist als ein vorgebbarer Grenzwert.

Die Rohrbearbeitungsmaschine 1 umfasst weiter eine Werkzeughalterung 13 zur Aufnahme eines Werkzeugs 14. Das Werkzeug 14 ist insbesondere ein spanendes Werkzeug, vorzugsweise ein Fräskopf.

Das Werkzeug 14 ist zumindest in der axialen Richtung verstellbar an der Werkzeughalterung 13 befestigt. Anstelle des in axialer Richtung verstellbaren Werkzeugs 14 oder zusätzlich dazu kann auch vorgesehen sein, dass die Werkzeughalterung 13 in axialer Richtung, also in Richtung der Längsmittelachse 7 des Rohres 3 verstellbar ist. Durch die axiale Verstellbarkeit des Werkzeugs 14 und/oder der Werkzeughalterung 13 wird die Zustellung des Werkzeugs 14 zur ersten Stirnfläche 2 bzw. zur zweiten Stirnfläche 4 erreicht.

Zusätzlich zur axialen Verstellbarkeit des Werkzeugs 14 und/oder der Werkzeughalterung 13 kann das Werkzeug 14 und/oder die Werkzeughalterung 13 auch in vertikaler Richtung verstellbar ausgebildet sein.

In Fig. 1 ist aus Gründen der besseren Darstellbarkeit das Werkzeug 14 in vertikaler Richtung oberhalb des tiefsten Bearbeitungsbereichs an der ersten Stirnfläche 2 angeordnet. Bevorzugt befindet sich das Werkzeug 14 auf der Höhe des tiefst möglichen Bearbeitungsbereichs der ersten Stirnfläche 2, also unterhalb der Anordnung des Werkzeugs 14 in Fig. 1.

Wie in Fig. 1 weiter strichliert dargestellt ist, besteht im Rahmen der Erfindung die Möglichkeit, dass nicht nur eine Werkzeughalterung 13 mit dem Werkzeug 14 im Bereich der ersten Stirnfläche 2 des Rohres angeordnet ist, sondern zusätzlich eine zweite Werkzeughalterung 13 mit einem zweiten Werkzeug 14, insbesondere einem Fräskopf, im Bereich der zweiten Stirnfläche 4 angeordnet ist. Es wird damit die gleichzeitige spanende Bearbeitung der ersten Stirnfläche 2 und der zweiten Stirnfläche 4 ermöglicht.

Die zweite Werkzeughalterung 13 und/oder das zweite Werkzeug 14 kann bzw. können gleich ausgebildet sein, wie die voranstehend beschriebene erste Werkzeughalterung 13 bzw. das erste Werkzeug 14, sodass also voranstehende bzw. nachstehende Ausführungen zur ersten Werkzeughalterung 13 und/oder zum ersten Werkzeug 14 entsprechend übertragen werden können. Insbesondere betrifft dies auch die axiale Verstellbarkeit des zweiten Werkzeugs 14 und/oder der zweiten Werkzeughalterung 13.

Sofern zwei Werkzeughalterungen 13 mit zwei Werkzeugen 14, insbesondere Fräsköpfen, in der Rohrbearbeitungsmaschine 1 vorhanden sind, können diese derart miteinander verbunden sein, dass die Werkzeuge 14 und/oder zumindest eine der Werkzeughalterungen 13 nur miteinander verstellt werden können. Bevorzugt wird jedoch eine Ausführungsvariante der Rohrbearbeitungsmaschine 1, bei der die beiden Werkzeuge 14 und/oder Werkzeughalterungen 13 unabhängig voneinander verstellt werden können, insbesondere die Zustellung der beiden Werkzeuge 14 zu der ersten Stirnfläche 2 bzw. der zweiten Stirnfläche 4 unabhängig voneinander erfolgen kann. Die beiden Werkzeughalterungen 13 mit den beiden Werkzeugen 14 können synchron miteinander betrieben und gegebenenfalls verstellt werden. In diesem Fall ist es von Vorteil, wenn die synchrone Koppelung unterbrochen wird, wenn mit einem der beiden Werkzeuge 14 zu viel an Material des Rohres 3 entfernt werden soll, d.h. wenn eines der beiden Werkzeuge 14 zu tief in das Rohr 3 eintauchen würde. Es kann damit Maschinenschäden vorgebeugt werden. Erkannt kann das gegebenenfalls zu tiefe Eintauchen der Werkzeuge über das nachfolgend beschrieben Messsystem bzw. der damit generierten Daten zur Verstellung der Werkzeuge 14 werden.

Die Rohrbearbeitungsmaschine 1 umfasst weiter eine optische Messeinrichtung 15. Bei der Ausführungsvariante der Rohrbearbeitungsmaschine 1 nach Fig. 1 ist die optische Messeinrichtung 15 eine Videokamera. Mit Hilfe dieser Videokamera ist es möglich, die Lage der Rohres 3 während der spanenden Bearbeitung zu messen bzw. zu bestimmen und basierend darauf gegebenenfalls eine Nachjustierung des ersten Werkzeuges 14 und gegebenenfalls des zweiten Werkzeuges 14 vorzunehmen, um damit die Zustellung des ersten Werkzeuges 14 zur ersten Stirnfläche 2 und gegebenenfalls des zweiten Werkzeuges 14 zur zweiten Stirnfläche 4 des Rohres 3 bei Bedarf zu ändern, wie dies nachfolgend noch näher erläutert wird.

Mit den Daten, die die Messeinrichtung 15 generiert, kann die gegebenenfalls erforderliche Nachjustierung des Werkzeugs 14 oder der Werkzeuge 14 während der spanenden Bearbeitung des Rohres 3 in Echtzeit bestimmt werden. Es kann damit die Ebenheit der Stirnflächen 2, 4 und deren Planparallelität zueinander verbessert werden.

Zur Berechnung der gegebenenfalls erforderlichen Nachjustierung ist der Rohrbearbeitungsmaschine 1 eine Datenverarbeitungsvorrichtung 16, insbesondere ein Computer, zugeordnet bzw. umfasst die Rohrbearbeitungsmaschine 1 diese Datenverarbeitungsvorrichtung 16. In einem Speicher der Datenverarbeitungsvorrichtung 16 ist dazu eine Softwareprogramm gespeichert, mit dessen Hilfe die Auswertung der Daten von der Messeinrichtung 15 und die Berechnung der gegebenenfalls erforderlichen Nachjustierung erfolgt.

Damit die Daten der Messeimichtung 15 in die Datenverarbeitungsvorrichtung 16 gelangen sind diese über eine Leitung 17 miteinander verbunden. Anstelle der Leitung 17 kann auch eine drahtlose Kommunikation der Messeimichtung 15 und der Datenverarbeitungsvorrichtung 16 vorgesehen werden. Es ist damit auch einfacher, die Daten von einer Bedienperson der Rohrbearbeitungsmaschine 1 für externe Zwecke ausgelesen und auf einem weiteren Computer gespeichert werden können. Selbstverständlich kann die Datenverarbeitungsvorrichtung für diese Kommunikation eine entsprechende Schnittstelle aufweisen.

Das Ergebnis der Datenauswertung und der Berechnung der gegebenenfalls erforderlichen Nachjustierung wird an das erste Werkzeug 14 bzw. die erste Werkzeughalterung 13 und gegebenenfalls an das zweite Werkzeug 14 bzw. die zweite Werkzeughalterung 13 über eine Leitung 18 bzw. über Leitungen 18 oder drahtlos zur gegebenenfalls vorzunehmenden entsprechenden Korrektur der relative Lage des ersten Werkzeuges 14 in Bezug auf die erste Stirnfläche 2 und gegebenenfalls der relative Lage des zweiten Werkzeugs 14 in Bezug auf die zweite Stirnfläche 4 des Rohres übermittelt.

Die Videokamera ist in Fig. 1 oberhalb des Rohres 3 angeordnet dargestellt. Es ist aber auch eine andere Positionierung relativ zum Rohr 3 möglich, beispielsweise eine seitliche. Um die Lage bzw. die Lageabweichung zu erkennen kann gemäß einer ersten Ausführungsvariante auf dem Rohmantel 6 ein um den gesamten Umfang des Rohrmantels 6 umlaufender Referenzkreis bzw. eine um den gesamten Umfang des Rohrmantels 6 umlaufende Referenzlinie auf dem Rohrmantel 6 angebracht werden. Diese Referenzlinie muss nicht zwingend kreisförmig sein, da bei entsprechender Adaptierung der Werkstückhalterung 13 auch Rohre 3 mit ovalem Querschnitt spanend bearbeitet werden können. Bei Rohren 3 mit kreisförmigem Querschnitt ist die Referenzlinie der Referenzkreis 19.

Wie aus Fig. 1 ersichtlich, muss der Referenzkreis 19 im Blickfeld der Videokamera liegen, um die Abweichung der Lage dieses Referenzkreises 19 während der spanenden Bearbeitung des Rohres 2 zu erkennen.

Alternativ oder zusätzlich dazu besteht die Möglichkeit, dass die Videokamera den (gesamten) Rohrmantel 6 zwischen der Kante des Rohrmantels 6 am Übergang auf die erste Stirnfläche 2 und der Kante des Rohrmantels 6 am Übergang auf die zweite Stirnfläche 4 des Rohres 3 im Blickfeld hat, wie dies in Fig. 1 strichliert dargestellt ist. Aus der Veränderung der Kantenlagen kann auf die Veränderung der Lage des Rohres 3 geschlossen werden.

Generell ist es möglich, dass mehr als eine Videokamera eingesetzt wird. Beispielsweise können zwei Videokameras verwendet werden, wobei je eine davon im Bereich (oberhalb) der Stirnflächen angeordnet und die Lage(veränderung) der Stirnflächen 2 und/oder 4 im Raum aufnimmt.

Anstelle einer Videokamera kann auch nur zumindest ein CCD-Sensor eingesetzt werden.

Sowohl die Videokamera als auch der zumindest eine CCD-Sensor weisen bekanntlich eine Matrix von lichtempfindlichen Dioden auf. Die prinzipielle Arbeitsweise einer Videokamera bzw. eines CCD-Sensors (auch die Videokamera weist üblicherweise einen CCD-Sensor auf) ist bekannt. Es sei daher zur Vermeidung von Wiederholungen auf den einschlägigen Stand der Technik dazu verwiesen.

Durch die Veränderung der Lage des Rohres 3 während der spanenden Bearbeitung gelangt auch auf die einzelnen Fotodioden eine unterschiedlich Quantität an Licht. Aus diesem Unterschied kann auf die Änderung der Lage des Rohres 3 während der spanenden Bearbeitung geschlossen werden.

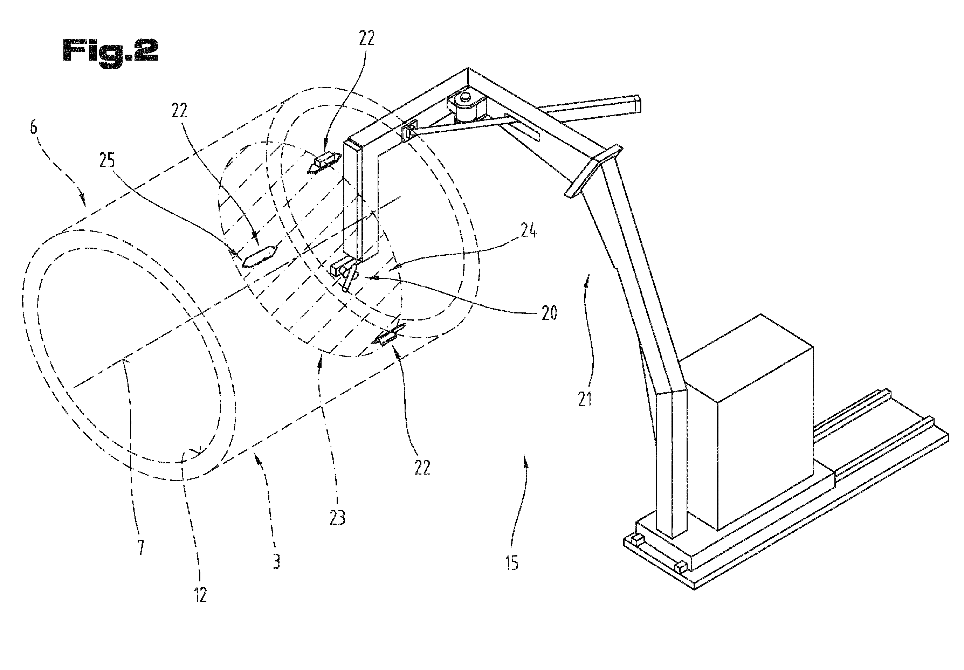

In der Fig. 2 ist ein Detail einer weiteren und gegebenenfalls für sich eigenständigen Ausführungsform der Rohrbearbeitungsmaschine 1 nach Fig. 1 gezeigt, wobei wiederum für gleiche Teile gleiche Bezugszeichen bzw. Bauteilbezeichnungen wie in den vorangegangenen Fig. 1 verwendet werden. Um unnötige Wiederholungen zu vermeiden, wird auf die detaillierte Beschreibung zu Fig. 1 hingewiesen bzw. Bezug genommen.

Da sich diese Ausführungsvariante der Rohrbearbeitungsmaschine 1 lediglich durch die optische Messeinrichtung 15 von jener nach Fig. 1 unterscheidet, wurde aus Gründen der besseren Darstellbarkeit auf die Wiedergabe der weiteren Bauelemente der Rohrbearbeitungsmaschine 1 verzichtet. Diese sind aber ebenso wie bei der Ausführungsvariante der Rohrbearbeitungsmaschine 1 nach Fig. 1 bei jener nach Fig. 2 vorhanden, insbesondere die Werkstückaufnahme 5 und die Werkzeughalterung 13.

Die optische Messeinrichtung 15 nach Fig. 2 umfasst einen Laser 20. Der Laser 20 ist insbesondere als rotierender Laser 20 ausgebildet, d.h. dass er während der spanenden Bearbeitung des Rohres 3 um seine Achse rotiert.

Der Laser 20 wird mit Hilfe einer Haltevorrichtung 21 innerhalb des Rohres 3 angeordnet.

An der Rohrmantelinnenseite 12 des Rohrmantels 6 sind zumindest drei Laserlichtsensoren 22 angeordnet. Es können aber auch mehr als drei Laserlichtsensoren 22 angeordnet, werden, beispielsweise vier, oder fünf, etc.. Die Laserlichtsensoren 22 können dem Stand der Technik hierfür ausgebildet sein. Insbesondere weisen die Laserlichtsensoren 22 jeweils ein längliches Sensorfeld auf, das mit seiner Längserstreckung in Richtung der Längsmittelachse 7 des Rohres 3 ausgerichtet ist.

Die Laserlichtsensoren 22 sind entlang eines Kreises 23 zumindest annähend auf gleicher Höhe (bezogen auf die Länge des Rohres 3 in Richtung der Längsmittelachse 7) innerhalb des Rohres angeordnet, insbesondere in gleichmäßigen Abständen zueinander über den inneren Umfang des Rohres 3 verteilt. Aufgrund der Rotation des Lasers 20 kann damit innerhalb des Rohres 3 eine Bezugsebene 24 aufgespannt werden. Verändert nun das Rohr 3 während der spanenden Bearbeitung der Stirnflächen 2, 4 seine Lage, dann weichen somit auch die Laserlichtsensoren 22 von dieser Bezugsebene ab, da sie mit dem Rohr 3 verbunden sind. Diese Lageänderung kann in der Folge von der Datenverarbeitungsanlage 16 (Fig. 1) ausgewertet und zur Nachjustierung der Zustellung des Werkzeuges 14 bzw. der Werkzeuge 14 in Echtzeit herangezogen werden.

Die Laserlichtsensoren 22 können beispielsweis an die Rohrmantelinnenseite 12 aufgeklebt werden. Bevorzugt weisen die Laserlichtsensoren 22 aber jeweils eine Magnethalterung 25 auf, über die sie mit dem Rohr 3 verbunden werden. Es können damit Nachjustierungen der Laserlichtsensoren 22 während deren Montage an der Rohrmantelinnenseite 12 einfacher durchgeführt werden bzw. ist damit deren Anordnung auf und Entfernung von der Rohrmantelinnenseite 12 einfacher und ohne Beschädigung des Rohres 3 möglich.

Wie bereits voranstehend ausgeführt, ist es mit der Rohrbearbeitungsmaschine 1 möglich, die Stirnflächen 2, 4 des Rohres plan zu bearbeiten bzw. die Planparallelität der beiden Stirnflächen 2, 4 zueinander zu verbessern bzw. herzustellen. Dazu wird während der spanenden Bearbeitung des Rohres 3 dessen Veränderung der Lage gemessen.

Das Rohr 3 weist zu Beginn der spanenden Bearbeitung eine erste Lage, die Ausgangslage, auf. Das oder die Werkezeug 14 wird oder werden entsprechend dieser Ausgangslage zu der Stirnfläche 2 oder den Stirnflächen 2, 4 für deren spanende Bearbeitung zugestellt. Während der spanenden Bearbeitung kann es zu einer Veränderung der Lage des Rohres 3 kommen, wodurch die Zustellung des oder der Werkzeug(e) 14 zu der Stirnfläche 2 oder den Stirnflächen 2, 4 nicht mehr richtig ist und damit diese Stirnfläche(n) 2 und gegebenenfalls 4 nicht im 90 ° Winkel zur Längsmittelachse 7 des Rohres bzw. nicht planparallel zueinander ausgebildet werden. Dies kann so weit führen, dass an diesen Stirnflächen 2, 4 durch die spanende Bearbeitung eine Welligkeit erzeugt wird. Nachdem das Rohr 3 nicht eingespannt ist, kann sich die Lage des Rohres 3 während der spanenden Bearbeitung sowohl in vertikaler als auch in horizontaler Richtung ändern, insbesondere wenn das Rohr 3 während der spanenden Bearbeitung zu taumeln anfängt bzw. eine Walkbewegung ausführt.

Um die Genauigkeit der spanenden Bearbeitung der Stirnfläche(n) 2, 4 zu verbessern, ist im einfachsten Fall vorgesehen, dass die horizontale Lage des Rohres 3, d.h. die Änderung der horizontalen Lage des Rohres 3 während der spanenden Bearbeitung mit der optischen Messeinrichtung 15 gemessen wird, insbesondere während der gesamten Zeitspanne, in der die spanende Bearbeitung durchgeführt wird. Es erfolgt also keine Vermessung der Stirnflächen 2, 4 vor der Bearbeitung und die Justierung des Werkzeugs 14 basierend auf diesem Messergebnis, sondern es wird ständig die Ist-Position des Rohres 3 gemessen.

Das Messergebnis bzw. die Messdaten werden laufend an die Datenverarbeitungsvorrichtung 16 (Fig. 1) übergeben, in der aus diesen Messdaten die Lageabweichung berechnet wird. Basierend auf dem Ergebnis der Berechnung kann in der Folge das Werkzeug 14 bzw. können die Werkzeuge 14 in ihrer relativen horizontalen Lage zur Stirnfläche 2 oder den Stirnflächen 2, 4 mit einem entsprechenden Antrieb, beispielsweise einem Linearantrieb oder einem Spindelantrieb, laufend verstellt werden, also deren Zustellung laufend nachjustiert werden. Aus den Messdaten können dazu Daten für den erforderlichen Verstellweg des Werkzeuges 14 oder der Werkezeuge 14 berechnet werden.

Die Lageerkennung kann beispielsweise über die voranstehend genannten CCD-Sensoren bzw. die Laserlichtsensoren erfolgen, indem in Fotodioden an unterschiedlichen Stellen unterschiedliche Ladungen erzeugt werden bzw. das Messfeld der Laserlichtsensoren 22 in unterschiedlichen Positionen vom Laser überstrichen werden. Aus dem Vergleich mit der Lage am Beginn der spanenden Bearbeitung, also beispielsweise der Lage des Referenzkreises 19 oder der Bezugsebene 24, kann die Lageabweichung berechnet werden.

Nur der Vollständigkeit halber sei erwähnt, dass eine Korrektur der Zustellung des Werkzeugs 14 oder der Werkzeuge 14 nur erfolgt, wenn eine Lageabweichung festgestellt wird. Andernfalls wie die Zustellung des Werkzeugs 14 oder der Werkzeuge 14 unverändert beibehalten. wird und über diese Änderung der Lage die erforderliche Zustellung des spanenden Werkzeugs zum Rohr berechnet wird und das Werkzeug entsprechend der berechneten Zustellung während der spanenden Bearbeitung nachjustiert wird.

Wie voranstehend ausgeführt, kann das Rohr 3 während der spanenden Bearbeitung auch zu taumeln anfangen. Die Stirnflächen 2, 3 ändern damit auch ihre Winkellage in Bezug auf die

Vertikale, also deren Parallelität mit der 90 ° Ebene zur Längsmittelachse 7 durch das Rohr 3. Für höhere Genauigkeiten des Ergebnisses der spanenden Bearbeitung kann auch die Abweichung von der Winkellage bestimmt und in die Berechnung der gegebenenfalls erforderlichen Nachjustierung des Werkzeugs 14 oder der Werkzeuge 14 miteinfließen.

Um eine noch höhere Genauigkeit des Ergebnisses der spanenden Bearbeitung zu erreichen, kann vorgesehen werden, dass die Lage des Rohres 3 auf den Zeitpunkt der Bearbeitung berechnet wird. Es ist damit gemeint, dass naturgemäß zwischen dem Zeitpunkt der Messung und dem Zeitpunkt der gegebenenfalls erforderlichen Verstellung des oder der Werkzeug(e) 14 eine kurze Zeitspanne besteht. Somit wird, wenn nur die horizontale und gegebenenfalls Winkellage des Rohres 3, also die räumlichen Parameter der Lageveränderung, berücksichtigt werden, ein für den Zeitpunkt der Bearbeitung ungenaues Berechnungsergebnis geliefert.

Bevorzugt wird die zeitliche Komponente der Lageänderung des Rohres 3 berücksichtigt, indem für die Nachjustierung der Zustellung des Werkzeuges 14 oder der Werkzeuge 14 von der konkreten Zustellung des Werkzeuges 14 oder der Werkzeuge 14 zu der Stirnfläche 2 oder den Stirnflächen 2, 4 ausgegangen, die im Zeitpunkt der Messung vorherrschte bzw. eingestellt war. Die Nachjustierung der Zustellung des Werkzeuges 14 oder der Werkzeuge 14 wird auf diese Einstellung bezogen. Es wird also bevorzugt auf den Bearbeitungszeitpunkt während der Messwerterfassung abgestellt. Dies kann beispielsweise mittels Vektorrechnung erfolgen.

Gemäß einer anderen Ausführungsvariante des Verfahrens und damit auch der Rohrbearbeitungsmaschine 1 kann vorgesehen sein, dass zu Beginn der spanenden Bearbeitung des Rohres 3 keine Bezugsebene 24 oder kein Referenzkreis 19 festgelegt werden. Es ist nämlich auch möglich, dass während der spanenden Bearbeitung der Stirnflächen 2 und/oder 4 ständig die gesamte Stirnfläche 2 und/oder 4 mit der optischen Messeinrichtung 15 vermessen wird und durch deren Lage im Raum die Lageabweichung berechnet und daraus die erforderliche Nachjustierung des Werkzeuges 14 oder der Werkzeuge 14 berechnet werden. In diesem Fall kann auf die Ebene im 90 ° Winkel zur Längsmittelachse 7 referenziert werden.

Wie bereits voranstehend ausgeführt, ist es möglich, dass beide Stirnflächen 2, 4 des Rohres gleichzeitig spanend bearbeitet werden. Obwohl es prinzipiell möglich ist, dass dazu die beiden Werkzeuge 14 miteinander gekoppelt werden, also gleich verstellt werden, wird die Verstellung zur Nachjustierung der Zustellung der beiden Werkzeuge 14 jedoch bevorzugt unabhängig voneinander vorgenommen. Dazu kann zwar auf denselben Datensatz aus der Messung der Lage des Rohres zurückgegriffen, in der Datenverarbeitungsvorrichtung 16 werden dann basierend darauf die individuellen Nachjustierungen der Zustellung für beide Werkezeuge 14 unabhängig voneinander berechnet und diese an die Verstelleinrichtungen für die Werkzeuge 14 weitergleitet.

Mit der Rohrbearbeitungsmaschine 1 können nicht nur zylindrische Rohre 3 sondern auch kegelstumpfförmige bzw. konische Rohre 3 spanend bearbeitet werden.

Für die Berechnung der Nachjustierung bzw. Nachstellung des Werkzeugs 14 oder der Werkzeuge 14 können u.a. folgenden Parameter in der Datenverarbeitungsvorrichtung 16 hinterlegt werden.
a.) Der Rohraußendurchmesser: dieser kann als Wert eingegeben oder mittels einer Messeinrichtung gemessen und der Datenverarbeitungsvorrichtung 16 zur Verfügung gestellt werden.
b.) Die Wandstärke des Rohres 3: auch dieser Wert kann also solcher in die Datenverarbeitungseinrichtung 16 eingegeben werden bzw. ist es möglich, die Wandstärke des Rohres 3 mittels bekannte Wandstärkemessgeräte zu bestimmen, gegebenenfalls als Mittelwert aus mehreren Einzelmessungen an unterschiedlichen Orten des Rohrmantels 6, insbesondere im Bereich der Stirnfläche(n) 2 und/oder 4, und so in der Datenverarbeitungsvorrichtung 16 zu hinterlegen.
c.) Die Drehrichtung während der Bearbeitung: dieser Wert kann ebenfalls manuell vorgegeben oder aktiv am Rohr 3 über ein Messrad und einen Drehgeber gemessen werden.
d.) Die Drehgeschwindigkeit: diese wird bevorzugt am Rohr 3 über ein Messrad und einen Drehgeber gemessen.
e.) Der Rollenwinkel: der Rollenwinkel wird als Wert in die Datenverarbeitungsvorrichtung 16 manuell eingegeben.
f.) Der Drehwinkel: dieser wird als Wert in die Datenverarbeitungsvorrichtung 16 manuell eingegeben.
g.) Die winkelorientierte Lage der Laserlichtsensoren 22: dieser wird als Wert in die Datenverarbeitungsvorrichtung 16 manuell eingegeben.

Bei dem Rollenwinkel handelt es sich um jenen Winkel, den zwei Gerade durch den Mittelpunkt des Querschnitts des Rohres 4 und den Mittelpunkt des Querschnitts der Rollen 9 des Rollenantriebs 8 miteinander definieren, jeweils in Richtung der Längsmittelachse 7 durch das Rohr 3 betrachtet, wobei die beiden Rollen 9 in Umfangsrichtung des Rohres 3 nebeneinander angeordnet sind, und durch jeweils eine Rolle 9 links und rechts der Vertikalen durch den Mittelpunkt des Querschnittes des Rohres 3 gebildet sind. Falls in Umfangsrichtung des Rohres 3 mehrere Rollen 9 unmittelbar nebeneinander angeordnet sind, wird jeweils die der besagten Vertikalen durch den Mittelpunkt des Querschnittes des Rohres 3 am nächsten liegende Rolle 9 zur Bestimmung des Rollenwinkels verwendet.

Der Drehwinkel ist definiert als jener Winkel, den eine Gerade durch den in Drehrichtung ersten Laserlichtsensor 22 und den Mittelpunkt des Querschnitts des Rohres 4 mit der Vertikalen durch den Mittelpunkt des Querschnitts des Rohres 4 am Beginn der Bearbeitung des Rohres 3 einschließt.

Die Ausführungsbeispiele zeigen mögliche bzw. beschreiben Ausführungsvarianten der Rohrbearbeitungsmaschine 1 bzw. des Verfahrens zur spanenden Bearbeitung des Rohres 3, wobei an dieser Stelle bemerkt sei, dass auch diverse Kombinationen der einzelnen Ausführungsvarianten untereinander möglich.

Weiter können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen. Dies betrifft insbesondere eine Rohrbearbeitungsmaschine 1 zum spanenden Bearbeiten einer ersten Stirnfläche 2 eines Rohres 3, mit einer Werkstückaufnahme 5 zur Aufnahme des Rohres 3 während der Bearbeitung, einer Werkzeughalterung 13 mit einem verstellbarem spanenden Werkzeug 14, und mit einer optischen Messeinrichtung 15, wobei die Werkstückaufnahme 5 einen Rollenantrieb 8 für eine Drehbewegung des Rohres 3 um eine Längsmittelachse 7 des Rohres 3 während der Bearbeitung der Stirnfläche 2 aufweist, und die Messeinrichtung 15 einen CCD-Sensor oder eine Videokamera oder einen rotierenden Laser 20, dem mehrere Laserlichtsensoren 22 zugeordnet sind, umfasst.

Der Ordnung halber sei abschließend darauf hingewiesen, dass zum besseren Verständnis des Aufbaus der Rohrbearbeitungsmaschine 1 diese bzw. deren Bestandteile teilweise unmaßstäblich und/oder vergrößert und/oder verkleinert dargestellt wurden.

### Bezugszeichenaufstellung

- 1: Rohrbearbeitungsmaschine
- 2: Stirnfläche
- 3: Rohr
- 4: Stirnfläche
- 5: Werkstückaufnahme

- 6: Rohrmantel
- 7: Längsmittelachse
- 8: Rollenantrieb
- 9: Rolle
- 10: Führungsvorrichtung

- 11: Schenkel
- 12: Rohrmantelinnenseite
- 13: Werkzeughalterung
- 14: Werkzeug
- 15: Messeinrichtung

- 16: Datenverarbeitungsvorrichtung
- 17: Leitung
- 18: Leitung
- 19: Referenzkreis
- 20: Laser

- 21: Haltervorrichtung
- 22: Laserlichtsensor
- 23: Kreis
- 24: Bezugsebene
- 25: Magnethalterung

## Patentansprüche

1. Verfahren zur spanenden Bearbeitung einer ersten Stirnfläche (2) eines Rohres (3), das einen Rohrmantel (6) aufweist, mit einem spanenden Werkzeug (14), wobei das Rohr (3) während der spanenden Bearbeitung in oder auf einer Werkstückaufnahme (5) abgestützt wird und mit einer optischen Messeimichtung (15), mittels der die Zustellung des Werkzeugs (14) zur ersten Stirnfläche (2) bestimmt wird, **dadurch gekennzeichnet, dass** das Rohr (3) in oder auf der Werkstückaufnahme (5) auf dem Rohrmantel (6) drehbeweglich abgestützt wird und während der spanenden Bearbeitung gedreht wird und dass über die Messeinrichtung (15) die Änderung der horizontalen Lage des Rohres (3) bestimmt wird und über diese Änderung der Lage die erforderliche Zustellung des spanenden Werkzeugs (14) zum Rohr (3) berechnet wird und das Werkzeug (14) entsprechend der berechneten Zustellung während der spanenden Bearbeitung gegebenenfalls nachjustiert wird.

2. Verfahren nach Anspruch 1, **dadurch gekennzeichnet, dass** die Nachjustierung der Zustellung des Werkzeugs (14) zum Rohr (3) auf den Zeitpunkt der Erfassung des Messergebnisses der Lage des Rohres (3) und die in diesem Zeitpunkt vorhandene Zustellung des Werkzeugs (14) berechnet wird.

3. Verfahren nach Anspruch 1 oder 2, **dadurch gekennzeichnet, dass** mit Hilfe einer vertikalen Bezugsebene (24) oder eines Referenzkreises (19) mit der optischen Messeinrichtung (15) die Änderung der Winkellage des Rohres (3) zu dieser Bezugsebene (24) oder diesem Referenzkreis (19) bestimmt wird und diese Daten in der Berechnung der Nachjustierung der Zustellung des Werkzeugs (14) zu der ersten Stirnfläche (2) berücksichtigt werden.

4. Verfahren nach einem der Ansprüche 1 bis 3, **dadurch gekennzeichnet, dass** eine optische Messeimichtung (15) verwendet wird, die einen rotierenden Laser (20) und mehrere Laserlichtsensoren (22) umfasst, wobei die Laserlichtsensoren (22) an einer Rohrmantelinnenseite (12) des Rohrmantels (6) angeordnet werden und mit dem rotierenden Laser (20) durch Rotation innerhalb des Rohrmantels (6) im Bereich der Laserlichtsensoren (22) eine Referenzebene, insbesondere die Bezugsebene (24) erzeugt wird.

5. Verfahren nach einem der Ansprüche 1 bis 5, **dadurch gekennzeichnet, dass** beide Stirnflächen (2, 4) des Rohres (3) gleichzeitig spanend bearbeitet werden.

6. Rohrbearbeitungsmaschine (1) zum spanenden Bearbeiten einer ersten Stirnfläche eines Rohres, mit einer Werkstückaufnahme zur Aufnahme des Rohres während der Bearbeitung, einer Werkzeughalterung mit einem verstellbarem spanenden Werkzeug, und mit einer optischen Messeinrichtung, **dadurch gekennzeichnet, dass** die Werkstückaufnahme einen Rollenantrieb für eine Drehbewegung des Rohres um eine Längsmittelachse des Rohres während der Bearbeitung der Stirnfläche aufweist, und dass die Messeinrichtung eine Datenverarbeitungseinrichtung mit einem Softwareprogramm umfasst, mit dem die Veränderung der Lage des Rohres während der Bearbeitung berechnet werden kann und dass die Datenverarbeitungseinrichtung mit der Werkzeughalterung zur Nachjustierung des spanenden Werkzeugs aufgrund der berechneten Lage des Rohres verbunden ist.

7. Rohrbearbeitungsmaschine (1) nach Anspruch 8, **dadurch gekennzeichnet, dass** die Messeinrichtung (15) einen CCD-Sensor oder eine Videokamera oder einen Laser (20) umfasst.

8. Rohrbearbeitungsmaschine (1) nach Anspruch 9, **dadurch gekennzeichnet, dass** der Laser (20) ein rotierender Laser (20) ist, der innerhalb des Rohres (3) angeordnet ist und dass dem Laser (20) mehrere, insbesondere zumindest drei, Laserlichtsensoren (22) zugeordnet sind, sodass innerhalb des Rohres (3) durch die Rotation des Lasers (20) eine Bezugsebene (24) aufgespannt werden kann.

9. Rohrbearbeitungsmaschine (1) nach Anspruch 10, **dadurch gekennzeichnet, dass** die Laserlichtsensoren (22) jeweils eine Magnethalterung (25) aufweisen, mit der die Laserlichtsensoren (22) auf der Rohrmantelinnenseite (12) des Rohres (3) befestigt werden können.

10. Rohrbearbeitungsmaschine (1) nach einem der Ansprüche 8 bis 11, **dadurch gekennzeichnet, dass** im Bereich einer zweiten Stirnfläche (4) des Rohres (3) eine zweite Werkzeughalterung (13) mit einem zweiten spanenden Werkzeug (14) angeordnet ist, sodass die beiden Stirnflächen (2, 3) des Roheres (3) gleichzeitig bearbeitet werden können.

11. Rohrbearbeitungsmaschine (1) nach einem der Ansprüche 8 bis 12, **dadurch gekennzeichnet, dass** das Softwareprogramm zur Berechnung der Lage des Rohres (3) während des Zeitpunktes der Erfassung der Messdaten ausgelegt ist.

12. Rohrbearbeitungsmaschine (1) nach Anspruch 12 oder 13, **dadurch gekennzeichnet, dass** die beiden Werkzeuge (14) unabhängig voneinander verstellbar ausgebildet sind.
